# EUROPEAN PATENT APPLICATION

(11) **EP 4 607 311 A1**
(43) Date of publication of application: **27.08.2025**
(21) Application number: 23894554.7
(22) Date of filing: 20.11.2023
(51) Int. Cl.: G05D 1/249, G01B 11/00, G01C 15/00, G05D 1/622, G05D 1/639, G05D 1/667, G05D 1/43, G05D 105/20, G05D 111/50, G05D 111/63

(54) **SYSTEM FOR CONTROLLING AUTONOMOUS-TRAVEL TRANSPORT ROBOT**

(30) Priority: 21.11.2022 JP 2022185473
(71) Applicant: KOWA COMPANY, LTD., Naka-ku Nagoya-shi Aichi 460-8625 (JP)
(72) Inventor: MIWA Naoki, Nagoya-shi, Aichi 460-0003 (JP); KUWAHARA Shinichiro, Musashimurayama-shi, Tokyo 208-0034 (JP); HAYASHI Hirofumi, Musashimurayama-shi, Tokyo 208-0034 (JP)
(74) Representative: WBH Wachenhausen Patentanwälte PartG mbB
(86) International application number: PCT/JP2023/041617
(87) International publication number: WO 2024/111547

(57) **Abstract**

A control unit 3 compares self-recognized position information output from an autonomous control unit 1a of an autonomous mobile robot 1 with overhead view position information included in image data output from a camera 2, and determines that a positional deviation has occurred when there is a difference between the self-recognized position information and the overhead view position information. Then, the control unit 3 sends, to the autonomous control unit 1a of the autonomous mobile robot 1, position correction information for correcting a current position recognized by the autonomous control unit 1a of the autonomous mobile robot 1 based on the overhead view position information.

## Description

### Technical Field

The present invention relates to a control system for an autonomous mobile robot (AMR) that recognizes its current traveling position by itself and travels autonomously toward a destination location registered in advance.

### Background Art

Autonomous mobile robots are used, for example, in a work for picking up specified packages in logistics warehouses and a work for automatically transporting products and parts on factory production lines, and are making a significant contribution to reduction of labor required for human works and labor saving.

An autonomous mobile robot has the function of autonomously traveling toward a destination location where a work is to be performed, based on map information of a traveling area in the case where the map information of the traveling area and the destination location have been registered. However, during traveling, a positional deviation may occur between the current position recognized by the robot itself and the actual traveling position, so that it is required to provide means of correcting the positional deviation.

Patent Literature 1 discloses a configuration in which a target point on a ceiling or wall surface is detected by a camera attached to an autonomous mobile robot, and a positional deviation from the target point that has been input in the autonomous mobile robot in advance is calculated and corrected.

However, in the configuration disclosed in the Patent Literature 1, the target point for detecting positional deviation must be set in advance, and the autonomous mobile robot is required to travel along a route passing through the target point, which has caused a problem that the degree of freedom of setting the travel route is restricted.

### Citation List

### Patent Literature

Patent Literature 1: Japanese Unexamined Patent Publication No. 2006-227673 (JP 2006-227673 A)

### Disclosure of Invention

### Technical Problem

The present invention has an object to provide an autonomous mobile robot control system that can appropriately correct positional deviation of the autonomous mobile robot (i.e., the deviation between the position which the robot recognizes by itself and the actual position of the robot) without restricting the degree of freedom of setting a travel route.

Furthermore, the present invention has another object to provide an autonomous mobile robot control system that enables the autonomous mobile robot to travel efficiently while avoiding obstacles and dead ends.

### Solution to Problem

An autonomous mobile robot control system comprises an autonomous mobile robot including an autonomous control unit that performs autonomous travel, a robot detection unit that detects the autonomous mobile robot at a position spaced away from the robot, and a correction control unit that corrects a traveling operation of the autonomous mobile robot, wherein the autonomous control unit of the autonomous mobile robot has a function of recognizing a current position and outputting information on the current position (self-recognized position information), and also controlling the autonomous mobile robot based on information on a traveling area registered in advance (traveling area information) and information on a destination location (destination location information) such that the autonomous mobile robot travels in the traveling area toward the destination location, the robot detection unit has a function of detecting the autonomous mobile robot present in the traveling area, and outputting position information (overhead view position information) of the autonomous mobile robot, the correction control unit has a function of receiving the self-recognized position information output from the autonomous control unit of the autonomous mobile robot and the overhead view position information output from the robot detection unit, comparing the self-recognized position information with the overhead view position information, and when there is a difference between the self-recognized position information and the overhead view position information, sending, to the autonomous control unit of the autonomous mobile robot, position correction information for causing the autonomous control unit of the autonomous mobile robot to correct the current position recognized by the autonomous control unit of the autonomous mobile robot based on the overhead view position information, and the autonomous control unit of the autonomous mobile robot is configured to correct the current position recognized by itself based on the position correction information upon receipt of the position correction information.

According to the present invention having the above configuration, it is possible to appropriately correct the positional deviation of the autonomous mobile robot without restricting the degree of freedom of setting a travel route.

Furthermore, the present invention having the above configuration may further comprise a traveling area monitoring unit that monitors the traveling area and outputs information on a status of the traveling area (traveling area monitoring information), wherein the correction control unit may have a function of receiving the traveling area monitoring information output from the traveling area monitoring unit, and when recognizing an obstacle in the traveling area based on the traveling area monitoring information, sending information on a position where the obstacle is present (obstacle position information) to the autonomous control unit of the autonomous mobile robot, and the autonomous control unit of the autonomous mobile robot may be configured to correct a travel route toward the destination location based on the obstacle position information so as to avoid the obstacle upon receipt of the obstacle position information.

According to the present invention having the above configuration, the autonomous mobile robot can travel efficiently while avoiding obstacles.

Here, the correction control unit may be configured to pre-store information for recognizing a floor of the traveling area, and when detecting presence of an object different from the floor on the travel route from the traveling area monitoring information output from the traveling area monitoring unit, the correction control unit may recognize the object different from the floor as an obstacle.

The traveling area monitoring unit may have a function of monitoring the traveling area, and updating and outputting the traveling area monitoring information at a preset time interval, the correction control unit may have a function of sequentially receiving the updated traveling area monitoring information, and when recognizing disappearance of an obstacle in the traveling area based on the traveling area monitoring information, sending obstacle disappearance information to the autonomous control unit of the autonomous mobile robot, and the autonomous control unit of the autonomous mobile robot may be configured to correct the travel route toward the destination location based on the obstacle disappearance information upon receipt of the obstacle disappearance information.

Furthermore, the present invention having the above configuration may further comprise a traveling area monitoring unit that monitors the traveling area and outputs information on a status of the traveling area (traveling area monitoring information), wherein the correction control unit may have a function of receiving the traveling area monitoring information output from the traveling area monitoring unit, and when recognizing a dead end in the traveling area based on the traveling area monitoring information, sending information on a position where the dead end is present (dead-end position information) to the autonomous control unit of the autonomous mobile robot, and the autonomous control unit of the autonomous mobile robot may be configured to correct a travel route toward the destination location based on the dead-end position information so as to avoid the dead end upon receipt of the dead-end position information.

According to the present invention having the above configuration, the autonomous mobile robot can travel efficiently while avoiding a dead end.

Here, the correction control unit may be configured to pre-store information for recognizing a floor of the traveling area and a criterion for determining a dead end, and when detecting a change in shape of the floor from the traveling area monitoring information output from the traveling area monitoring unit, the correction control unit may collate a shape-changed floor portion with the criterion for determining a dead end to recognize the dead end.

Furthermore, the traveling area monitoring unit may have a function of monitoring the traveling area, and updating and outputting the traveling area monitoring information at a preset time interval, the correction control unit may have a function of sequentially receiving the updated traveling area monitoring information, and when recognizing disappearance of the dead end based on the traveling area monitoring information, sending dead-end disappearance information to the autonomous control unit of the autonomous mobile robot, and the autonomous control unit of the autonomous mobile robot may be configured to correct a travel route toward the destination location based on the dead-end disappearance information upon receipt of the dead-end disappearance information.

In the present invention having the above configuration, the robot detection unit may be configured by a camera that detects the autonomous mobile robot from above. Furthermore, the traveling area monitoring unit may also be configured by a camera that detects the traveling area from above.

### Brief Description of Drawings

FIG. 1 is an overview diagram of an autonomous mobile robot control system according to an embodiment of the present invention;
FIG. 2 is a schematic diagram showing a configuration in which a plurality of cameras are installed on a ceiling portion to provide an overhead view of a traveling area of an autonomous mobile robot;
FIG. 3 is a plan view of the traveling area to show a positional deviation correcting function in the autonomous mobile robot control system according to the embodiment of the present invention;
FIG. 4 is a system overview diagram showing the positional deviation correcting function;
FIG. 5 is a flowchart showing an operation of a control unit when the positional deviation correcting function is executed;
FIG. 6 is a plan view of the traveling area to show an obstacle avoiding function in the autonomous mobile robot control system according to the embodiment of the present invention;
FIG. 7 is a system overview diagram showing the obstacle avoiding function;
FIG. 8 is a flowchart showing an operation of the control unit when the obstacle avoiding function is executed;
FIG. 9 is a plan view of a traveling area to show a dead-end avoiding function in the autonomous mobile robot control system according to the embodiment of the present invention;
FIG. 10 is a system overview diagram showing the dead-end avoiding function; and
FIG. 11 is a flowchart showing an operation of the control unit when the dead-end avoiding function is executed.

### Reference Signs List

1: Autonomous mobile robot (AMR), 1a: Autonomous control unit,
2: Camera, 3: Control unit,
10: Floor, 11: Existing obstacle, 12: New obstacle, 13: Dead end,
A: Traveling area, B: Destination location

### Description of Embodiments

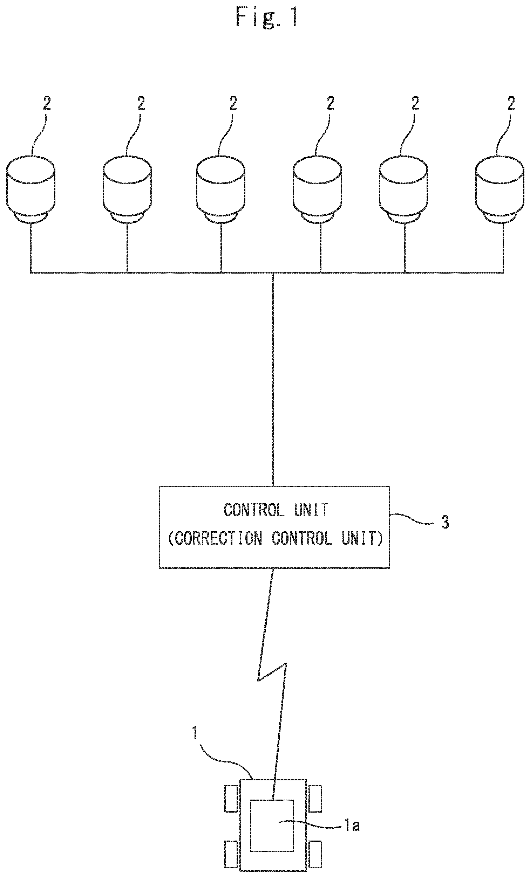

Hereinafter, an embodiment of the present invention will be described in detail with reference to the drawings. As shown in FIG. 1, an autonomous mobile robot control system according to the present embodiment includes an autonomous mobile robot (AMR) 1 as a control target, a camera 2 for monitoring the autonomous mobile robot 1 and a traveling area A of the robot 1, and a control unit 3 for controlling the traveling operation of the autonomous mobile robot 1 in a timely manner. Here, the camera 2 functions as a robot detection unit for detecting the autonomous mobile robot 1 at a position spaced from the robot, and also functions as a traveling area monitoring unit for monitoring the traveling area A and outputting information regarding the status of the traveling area A.

The autonomous mobile robot 1 is equipped with an autonomous control unit 1a for performing autonomous travel. This autonomous control unit 1a is configured by a microcomputer, and has a wireless communication function of transmitting and receiving data to and from the control unit 3.

The autonomous control unit 1a has map information of an area where the autonomous mobile robot 1 travels (traveling area A) and a destination location B where a work will be performed, the map information and the destination location being registered in the autonomous control unit 1a in advance, and the autonomous control unit 1a has a function of autonomously traveling the autonomous mobile robot 1 towards the destination location B based on the map information of the traveling area A.

The autonomous mobile robot 1 also has a function of recognizing its current position. Various known means such as means for measuring the rotation of the wheels with an encoder to detect the travel distance and direction and recognizing the current position from these detection data and means using GPS may be applied as means for recognizing the current position, for example.

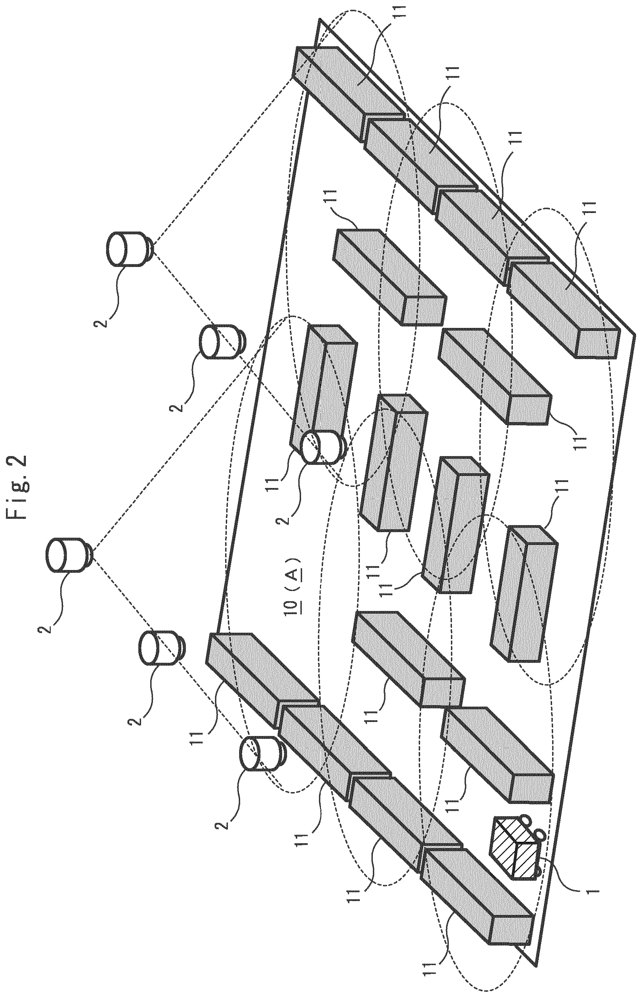

The camera 2 has a function of capturing an image of the traveling area A of the autonomous mobile robot 1 and an image of the autonomous mobile robot 1 traveling in the traveling area A, and sending the image data of the captured images to the control unit 3. The present embodiment is configured such that as shown in FIG. 2, a plurality of cameras 2 capable of overlooking the traveling area A are installed on a ceiling portion, and the entire traveling area A is imaged by the plurality of cameras 2.

A main portion of the control unit 3 is configured by a computer called a vision processor (VP) incorporated with image processing software, and a control panel (PLC) for performing centralized control on a plurality of autonomous mobile robots 1. The control unit 3 also includes a wireless communication unit for transmitting and receiving data to and from the autonomous control unit 1a of the autonomous mobile robot 1, and a data input/output unit for controlling the cameras 2 to receive image data captured by the cameras 2.

In the present embodiment, the control unit 3 also functions as a correction control unit 3 for correcting the traveling operation of the autonomous mobile robot 1. Specifically, the autonomous mobile robot control system according to this embodiment which is mainly configured with the control unit 3 (correction control unit) has the following three functions.
(1) Positional deviation correcting function: A function of causing the autonomous control unit 1a of the autonomous mobile robot 1 to correct a current position recognized by the autonomous control unit 1a when there is a deviation between the current position recognized by the autonomous control unit 1a and the actual position.
(2) Obstacle avoiding function: A function of causing the autonomous mobile robot 1 to travel while avoiding an obstacle when the obstacle appears in a traveling area A of the autonomous mobile robot 1.
(3) Dead-end avoiding function: A function of causing the autonomous mobile robot 1 to travel while avoiding a dead end 13 when the dead end 13 appears in a traveling area A of the autonomous mobile robot 1.

Next, each function of the autonomous mobile robot control system described above will be described in detail.

### [Positional Deviation Correcting Function]

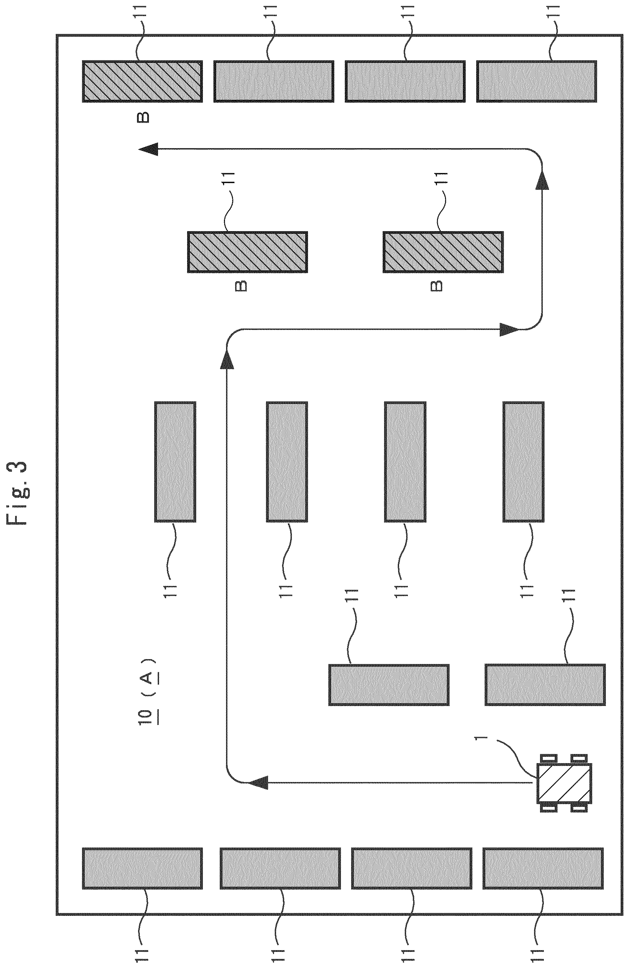

First, the positional deviation correcting function will be described mainly with reference to FIGS. 3 to 5.

For example, as shown in FIG. 3, various existing obstacles 11 such as cabinets and tables are placed on a floor 10 of a logistics warehouse or a production factory for goods where the autonomous mobile robot 1 travels. The autonomous mobile robot 1 travels autonomously toward a destination location B under the control of the autonomous control unit 1a while an area where these existing obstacles 11 are not placed is set as a traveling area A. Information on the traveling area A (traveling area information) and information on the destination location B (destination location information) are registered in advance in the autonomous control unit 1a of the autonomous mobile robot 1.

The current position recognized by the autonomous control unit 1a of the autonomous mobile robot 1 may deviate from the actual position due to slippage of wheels, a sudden drop in GPS accuracy, or the like.

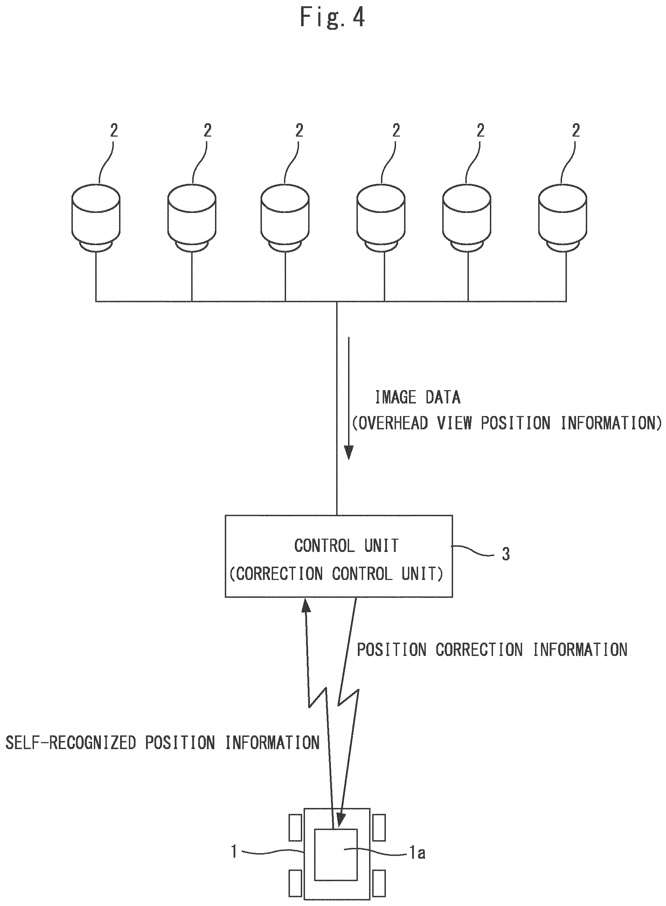

Therefore, in the present embodiment, as shown in FIG. 4, a plurality of cameras 2 monitor an autonomous mobile robot 1 present in the traveling area A, and sequentially output image data including position information (overhead (bird's-eye) view position information) of the autonomous mobile robot 1.

Furthermore, the autonomous control unit 1a of the autonomous mobile robot 1 sequentially transmits information on the current position recognized by itself (self-recognized position information) to the control unit 3.

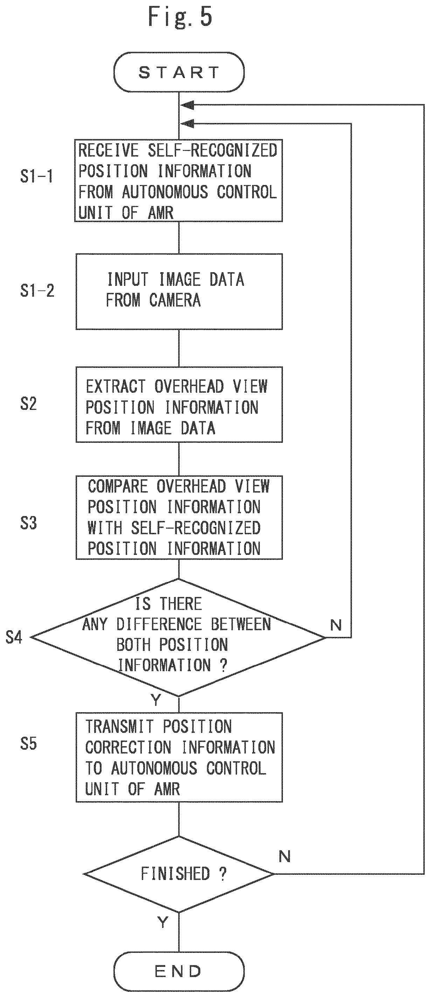

As shown in FIG. 5, the control unit 3 receives the self-recognized position information output from the autonomous control unit 1a of the autonomous mobile robot (AMR) 1 (step S1-1), and receives image data output from the cameras 2 (step S1-2). Then, the control unit 3 extracts the overhead view position information from the image data (step S2).

In order to extract the overhead view position information from the image data, for example, it may be adopted that an autonomous mobile robot 1 is extracted from image data captured by the cameras 2 and registered in advance, the autonomous mobile robot 1 is recognized from the image data successively sent from the cameras 2 while referring to the registered image data of the autonomous mobile robot 1, and the position and orientation (traveling direction) of the autonomous mobile robot 1 are extracted as the overhead view position information.

Next, the control unit 3 compares the overhead view position information of the autonomous mobile robot 1 extracted from the image data with the self-recognized position information received from the autonomous control unit 1a of the autonomous mobile robot 1 (step S3).

It is determined whether there is a difference between the overhead view position information and the self-recognized position information (step S4), and if there is a difference between them (i.e., when the current position of the autonomous mobile robot 1 based on the self-recognized position information deviates from the position based on the overhead view position information), position correction information for correcting the current position recognized by the autonomous control unit 1a of the autonomous mobile robot 1 based on the overhead view position information is transmitted to the autonomous control unit 1a of the autonomous mobile robot (AMR) 1 (step S5).

Upon receiving the position correction information, the autonomous control unit 1a of the autonomous mobile robot 1 corrects the current position recognized by itself based on the position correction information. As a result, the self-recognized position information recognized by the autonomous control unit 1a is corrected, and the autonomous control unit 1a is enabled to control the autonomous mobile robot 1 to autonomously travel along its actual position.

### [Obstacle Avoiding Function]

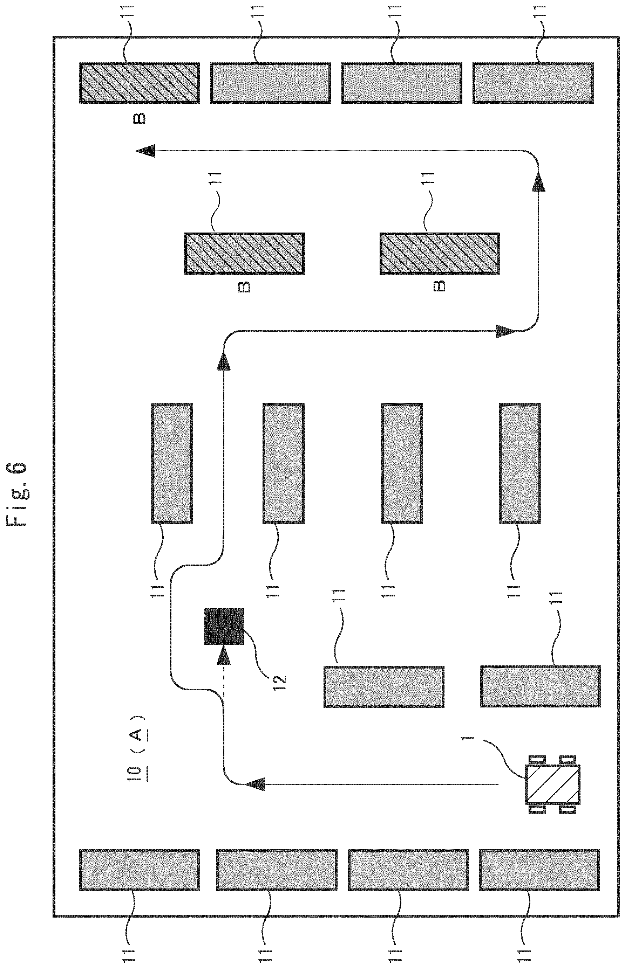

Next, the obstacle avoiding function will be described mainly with reference to FIGS. 6 to 8.

For example, as shown in FIG. 6, there is assumed a situation in which a new obstacle 12 is placed on a part of the floor 10 that forms the traveling area A of the autonomous mobile robot 1, thereby assuming a situation in which a travel route to a destination location B set by the autonomous control unit 1a is blocked by the new obstacle 12.

In the present embodiment, when the travel route is blocked by the new obstacle 12 in this way, necessary information is transmitted from the control unit 3 to the autonomous control unit 1a so as to avoid the new obstacle 12.

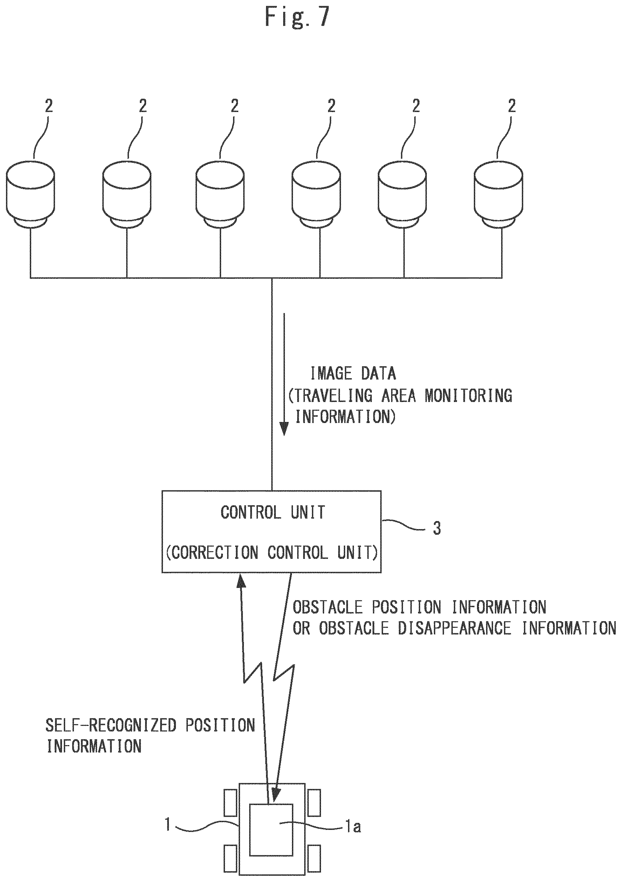

The plurality of cameras 2 shown in FIG. 4 monitor the traveling area A, and sequentially output image data including information on the status of the traveling area A (traveling area monitoring information) as shown in FIG. 7.

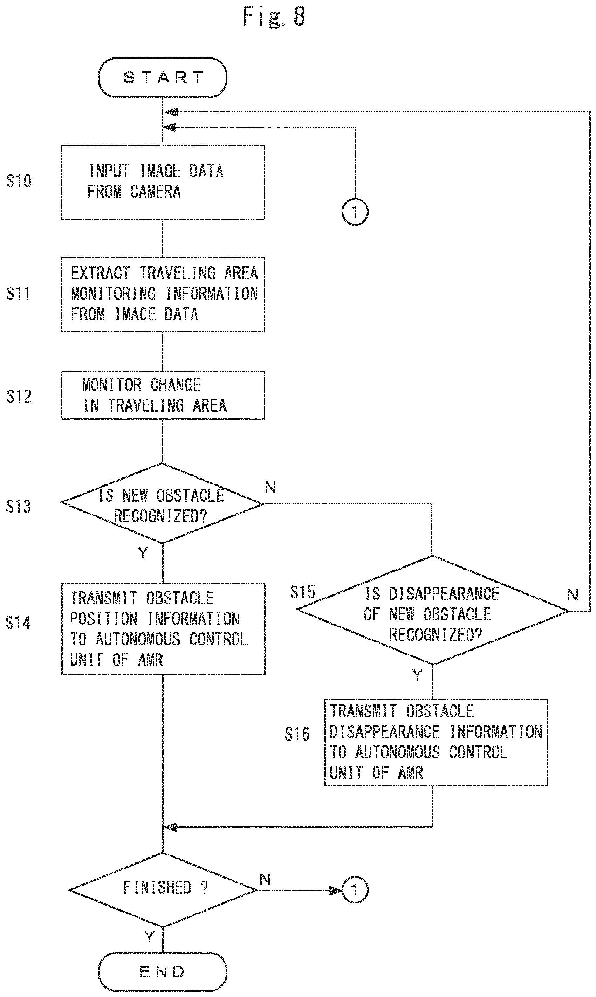

As shown in FIG. 8, the control unit 3 receives the image data output from the cameras 2 (step S10). Then, the control unit 3 extracts the traveling area monitoring information from the image data (step S11).

For example, the floor 10 is recognized from the image data input from the cameras 2 by focusing on the difference in color between the floor 10 and the existing obstacles 11 such as cabinets and tables, and an area where the floor 10 is recognized (in other words, an area where there is no existing obstacle 11) is determined as the traveling area A, and information on that area is extracted as traveling area monitoring information.

Next, the control unit 3 monitors changes in the traveling area A based on the traveling area monitoring information extracted from the image data successively sent from the cameras 2 (step S12), and when an object of a color different from the color of the floor 10 is confirmed in the traveling area A, the control unit 3 recognizes the object as a new obstacle 12 (step S13).

Thereafter, the control unit 3 transmits information on a position where the new obstacle 12 is present (obstacle position information) to the autonomous control unit 1a of the autonomous mobile robot (AMR) 1 (step S14).

The autonomous control unit 1a of the autonomous mobile robot 1 that has received the obstacle position information corrects the travel route toward the destination location B based on the obstacle position information so as to avoid the new obstacle 12. This avoids a collision with the new obstacle 12, which allows the autonomous mobile robot 1 to continue its autonomous travel efficiently.

Furthermore, the control unit 3 monitors changes in the traveling area A based on the traveling area monitoring information extracted from the image data successively sent from the cameras 2 (steps S10 to S12), and recognizes disappearance of the new obstacle 12 which has been present in the traveling area A when the color at the position where the new obstacle 12 has been present changes to the same color as the floor 10 (step S15).

Then, the control unit 3 transmits, to the autonomous control unit 1a of the autonomous mobile robot (AMR) 1, obstacle disappearance information notifying that the new obstacle 12 has been removed (step S16).

The autonomous control unit 1a of the autonomous mobile robot 1 that has received the obstacle disappearance information corrects the travel route toward the destination location B based on the obstacle disappearance information. As a result, for example, the travel route is corrected to the shortest travel route toward the destination location B, so that the autonomous mobile robot 1 can continue its autonomous travel efficiently.

### [Dead-end Avoiding Function]

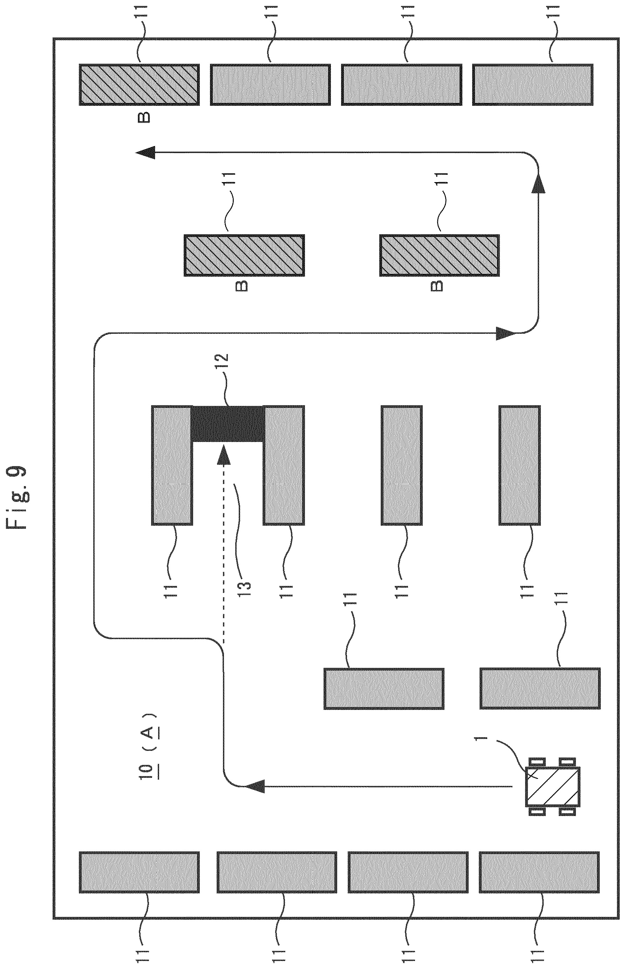

Next, the dead-end avoiding function will be described mainly with reference to FIGS. 9 to 11.

For example, as shown in FIG. 9, there is assumed a situation in which a new obstacle 12 is placed on a part of the floor 10 that forms the traveling area A of the autonomous mobile robot 1, resulting in formation of a U-shaped dead end 13 surrounded by obstacles in the traveling area A.

In the present embodiment, when a dead end 13 is formed in the traveling area A as described above, necessary information is transmitted from the control unit 3 to the autonomous control unit 1a such that the travel route is set so as to avoid the dead end 13.

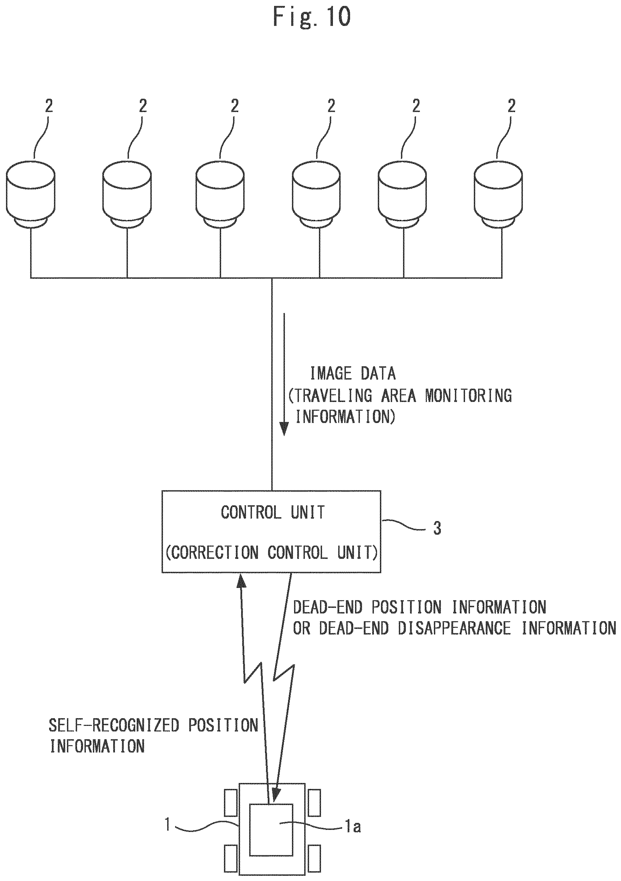

The plurality of cameras 2 shown in FIG. 4 monitor the traveling area A, and sequentially output image data including information on the status of the traveling area A (traveling area monitoring information) as shown in FIG. 10.

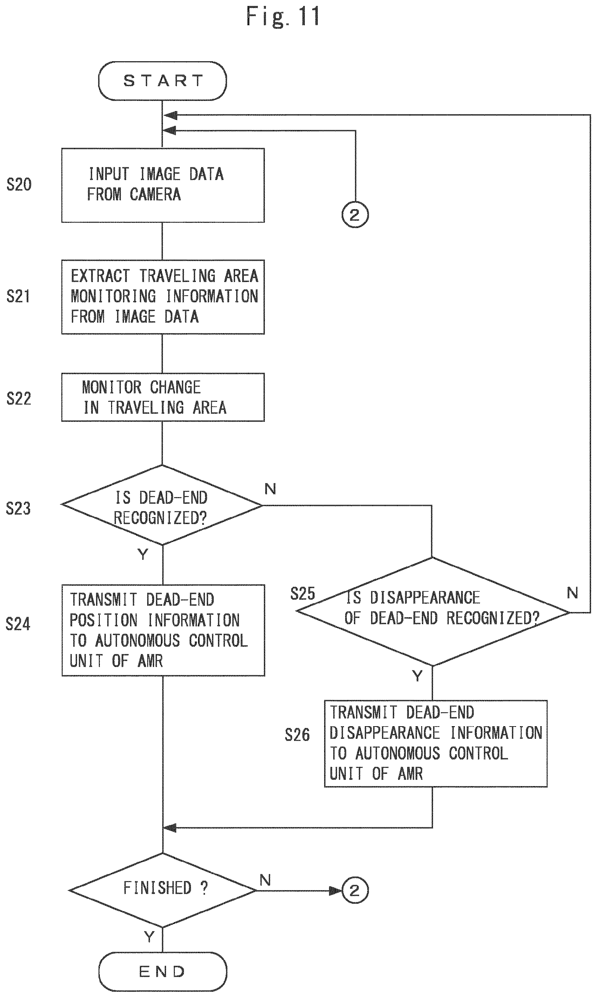

The control unit 3 receives the image data output from the cameras 2 as shown in FIG. 11 (step S20). Then, the control unit 3 extracts the traveling area monitoring information from the image data in the same manner as described above (step S21).

Next, the control unit 3 monitors changes in the traveling area A based on the traveling area monitoring information extracted from the image data successively sent from the cameras 2 (step S22), and when a change in the shape of the traveling area A (the shape of the floor 10) is confirmed, the control unit 3 determines whether the shape of the floor 10 at the changed portion forms a dead end 13 (step S23).

When the control unit 3 recognizes that a dead end 13 is formed, the control unit 3 transmits information on a position where the dead end 13 is present (dead-end position information) to the autonomous control unit 1a of the autonomous mobile robot (AMR) 1 (step S24).

The autonomous control unit 1a of the autonomous mobile robot 1 that has received the dead-end position information corrects the travel route toward the destination location B based on the dead-end position information so as to avoid the dead end 13. This avoids a situation where the autonomous mobile robot 1 enters the dead end 13 and thus is unable to travel, which allows the autonomous mobile robot 1 to continue autonomous travel efficiently.

Furthermore, the control unit 3 monitors changes in the traveling area A based on traveling area monitoring information extracted from image data successively sent from the cameras 2 (steps S20 to S22), and when the control unit 3 recognizes disappearance of the dead end 13 due to a change in the shape of the floor 10 at the portion where the dead end 13 is present (step S25), the control unit 3 transmits, to the autonomous control unit 1a of the autonomous mobile robot (AMR) 1, dead-end disappearance information notifying that the dead end 13 has disappeared (step S26).

The autonomous control unit 1a of the autonomous mobile robot 1 that has received the dead-end disappearance information corrects the travel route toward the destination location B based on the dead-end disappearance information. As a result, the travel route is corrected to, for example, a shortest travel route toward the destination location B, and the autonomous mobile robot 1 can continue autonomous travel efficiently.

### [Modifications and Applications]

The present invention is not limited to the above-described embodiment, and various modifications and applications can be implemented as needed.

The robot detection unit is not limited to a camera, but can also be configured with a device having a function of detecting the autonomous mobile robot at a position away from the robot, such as a sensor using laser, infrared rays, ultrasonic waves or the like, or a radar detection unit.

Similarly, the traveling area monitoring unit is not limited to a camera, but can also be configured with a device having a function of monitoring the traveling area and outputting information on the status of the traveling area, such as a sensor using laser, infrared rays, ultrasonic waves, or the like.

Furthermore, even when a camera is used as the robot detection unit or the traveling area monitoring unit, the present invention is not limited to the configuration in which a plurality of cameras are installed on the ceiling as in the above embodiment. For example, the robot detection unit or the traveling area monitoring unit may be configured by mounting a camera on a drone. Furthermore, the autonomous mobile robot and the traveling area of the robot may be monitored by installing a guide rail on the ceiling or the like and moving one or the minimum number of cameras along the guide rail.

In order to provide the obstacle avoiding function and the dead-end avoiding function, it is not necessary to have an overhead (bird's-eye) view of the entire floor of a logistics warehouse or factory, and a configuration may be adopted in which the minimum number of cameras are installed so as to image only areas where new obstacles may be placed or dead ends may be formed with high probability.

In addition to focusing on the color of the floor, as means for extracting traveling area monitoring information from image data from the cameras by the control unit (correction control unit) may be adopted, for example, means in which image information of existing obstacles is registered in advance, existing obstacles drawn in image data from the cameras are recognized based on the image information of the existing obstacles, and an area where these existing obstacles are not present is determined as a traveling area, and traveling area monitoring information is extracted.

The number of autonomous mobile robots to be detected by the robot detection unit is not limited to one, and each of a plurality of autonomous mobile robots traveling in the traveling area may be detected by the robot detection unit.

In this case, the control unit (correction control unit) or the autonomous control unit may recognize other autonomous mobile robots as new obstacles, and thus the present invention may be configured such that a rule for avoiding new obstacles (for example, avoiding new obstacles by taking a clockwise route) is set. By configuring in this way, even when a plurality of autonomous mobile robots traveling in opposite directions recognize each other as new obstacles, they can avoid collisions by traveling along routes that avoid each other without avoiding each other in the same direction (the direction that would cause a collision) .

## Claims

1. An autonomous mobile robot control system comprising:
an autonomous mobile robot including an autonomous control unit that performs autonomous travel;
a robot detection unit that detects the autonomous mobile robot at a position spaced away from the robot; and
a correction control unit that corrects a traveling operation of the autonomous mobile robot, wherein:
the autonomous control unit of the autonomous mobile robot has a function of recognizing a current position and outputting information on the current position (self-recognized position information), and also controlling the autonomous mobile robot based on information on a traveling area registered in advance (traveling area information) and information on a destination location (destination location information) such that the autonomous mobile robot travels in the traveling area toward the destination location;
the robot detection unit has a function of detecting the autonomous mobile robot present in the traveling area, and outputting position information (overhead view position information) of the autonomous mobile robot;
the correction control unit has a function of receiving the self-recognized position information output from the autonomous control unit of the autonomous mobile robot and the overhead view position information output from the robot detection unit, comparing the self-recognized position information with the overhead view position information, and when there is a difference between the self-recognized position information and the overhead view position information, sending, to the autonomous control unit of the autonomous mobile robot, position correction information for causing the autonomous control unit of the autonomous mobile robot to correct the current position recognized by the autonomous control unit of the autonomous mobile robot based on the overhead view position information; and
the autonomous control unit of the autonomous mobile robot is configured to correct the current position recognized by itself based on the position correction information upon receipt of the position correction information.

2. The autonomous mobile robot control system according to claim 1, further comprising a traveling area monitoring unit that monitors the traveling area and outputs information on a status of the traveling area (traveling area monitoring information), wherein:
the correction control unit has a function of receiving the traveling area monitoring information output from the traveling area monitoring unit, and when recognizing an obstacle in the traveling area based on the traveling area monitoring information, sending information on a position where the obstacle is present (obstacle position information) to the autonomous control unit of the autonomous mobile robot; and
the autonomous control unit of the autonomous mobile robot is configured to correct a travel route toward the destination location based on the obstacle position information so as to avoid the obstacle upon receipt of the obstacle position information.

3. The autonomous mobile robot control system according to claim 2, wherein the correction control unit pre-stores information for recognizing a floor of the traveling area, and when detecting presence of an object different from the floor on the travel route from the traveling area monitoring information output from the traveling area monitoring unit, the correction control unit recognizes the object different from the floor as an obstacle.

4. The autonomous mobile robot control system according to claim 2, wherein:
the traveling area monitoring unit has a function of monitoring the traveling area, and updating and outputting the traveling area monitoring information at a preset time interval;
the correction control unit has a function of sequentially receiving the updated traveling area monitoring information, and when recognizing disappearance of an obstacle in the traveling area based on the traveling area monitoring information, sending obstacle disappearance information to the autonomous control unit of the autonomous mobile robot; and
the autonomous control unit of the autonomous mobile robot is configured to correct the travel route toward the destination location based on the obstacle disappearance information upon receipt of the obstacle disappearance information.

5. The autonomous mobile robot control system according to claim 1, further comprising a traveling area monitoring unit that monitors the traveling area and outputs information on a status of the traveling area (traveling area monitoring information), wherein:
the correction control unit has a function of receiving the traveling area monitoring information output from the traveling area monitoring unit, and when recognizing a dead end in the traveling area based on the traveling area monitoring information, sending information on a position where the dead end is present (dead-end position information) to the autonomous control unit of the autonomous mobile robot; and
the autonomous control unit of the autonomous mobile robot is configured to correct a travel route toward the destination location based on the dead-end position information so as to avoid the dead end upon receipt of the dead-end position information.

6. The autonomous mobile robot control system according to claim 5, wherein the correction control unit pre-stores information for recognizing a floor of the traveling area and a criterion for determining a dead end, and when detecting a change in shape of the floor from the traveling area monitoring information output from the traveling area monitoring unit, the correction control unit collates a shape-changed floor portion with the criterion for determining a dead end to recognize the dead end.

7. The autonomous mobile robot control system according to claim 5, wherein:
the traveling area monitoring unit has a function of monitoring the traveling area, and updating and outputting the traveling area monitoring information at a preset time interval;
the correction control unit has a function of sequentially receiving the updated traveling area monitoring information, and when recognizing disappearance of the dead end based on the traveling area monitoring information, sending dead-end disappearance information to the autonomous control unit of the autonomous mobile robot; and
the autonomous control unit of the autonomous mobile robot is configured to correct a travel route toward the destination location based on the dead-end disappearance information upon receipt of the dead-end disappearance information.

8. The autonomous mobile robot control system according to claim 1, wherein the robot detection unit is a camera that detects the autonomous mobile robot from above.

9. The autonomous mobile robot control system according to any one of claims 2 to 7, wherein the traveling area monitoring unit is a camera that detects the traveling area from above.
